# EUROPEAN PATENT APPLICATION

(11) **EP 4 246 380 A1**
(43) Date of publication of application: **20.09.2023**
(21) Application number: 22175405.4
(22) Date of filing: 25.05.2022
(51) Int. Cl.: G06N 5/04, G06Q 20/02

(54) **HYBRID ARTIFICIAL INTELLIGENCE GENERATED ACTIONABLE RECOMMENDATIONS**

(30) Priority: 18.03.2022 US 202217698676
(71) Applicant: Intuit Inc., Mountain View, CA 94043 (US)
(72) Inventor: AGARWAL, Sudhir, Mountain View (US); MOUATADID, Lalla, Mountain View (US); SREEPATHY, Anu, Mountain View (US); FURBISH, Kevin Michael, Mountain View (US)
(74) Representative: D Young & Co LLP

(57) **Abstract**

A method implements hybrid artificial intelligence generated actionable recommendations. The method includes processing an event to identify an action of an event action set. The event includes an event value. The method further includes processing the event action set to generate an objective value, corresponding to the action, and a probability, corresponding to the action, and to form a model action set from the event action set. The method further includes filtering the model action set using action rule data and rule user data to generate a filtered action set. The method further includes processing, using the objective value and the probability, the filtered action set with an optimization controller to generate suggested action sets from which a selected action set is selected. The selected action set corresponds to a combined action value that satisfies the event value.

## Description

### BACKGROUND

Computer systems identify events in response to changes in data. In response to identifying an event, computer systems perform actions. A challenge is to identify a set of actions to take in response to an event.

### SUMMARY

In general, in one or more aspects, the disclosure relates to a method that implements hybrid artificial intelligence generated actionable recommendations. The method includes processing an event to identify an action of an event action set. The event includes an event value. The method further includes processing the event action set to generate an objective value, corresponding to the action, and a probability, corresponding to the action, and to form a model action set from the event action set. The method further includes filtering the model action set using action rule data and rule user data to generate a filtered action set. The method further includes processing, using the objective value and the probability, the filtered action set with an optimization controller to generate suggested action sets from which a selected action set is selected. The selected action set corresponds to a combined action value that satisfies the event value.

In general, in one or more aspects, the disclosure relates to a system that implements hybrid artificial intelligence generated actionable recommendations. The system includes an event controller configured to identify an action, a model controller configured to generate an objective value and a probability, an action controller configured to generate a filtered action set, an optimization controller configured to generate suggested action sets, and a server application executing on one or more servers. The server application is configured for processing, by the event controller, an event to identify the action of an event action set. The event includes an event value. The server application is further configured for processing, by the model controller, the event action set to generate the objective value, corresponding to the action, and the probability, corresponding to the action, and to form a model action set from the event action set. The server application is configured for filtering, by the action controller, the model action set using action rule data and rule user data to generate the filtered action set. processing, by the optimization controller using the objective value and the probability, the filtered action set with the optimization controller to generate the suggested action sets from which a selected action set is selected. The selected action set corresponds to a combined action value that satisfies the event value.

In general, in one or more aspects, the disclosure relates to a method that implements hybrid artificial intelligence generated actionable recommendations. The method includes displaying a notification of an event and displaying a model action set generated in response to the event. The model action set is generated by: processing an event, event rule data, and event user data to identify an action of an event action set; and processing the event action set, action model data, and model user data to generate an objective value, corresponding to the action, and a probability, corresponding to the action and form a model action set from the event action set. The method further includes displaying suggested action sets generated response to filtering the model action set. The suggested action sets are generated by processing a filtered action set with an optimization controller. The method further includes executing a selected action set in response to a selection from the suggested action sets.

Other aspects of the invention will be apparent from the following description and the appended claims.

### BRIEF DESCRIPTION OF DRAWINGS

Figure 1A and Figure 1B show diagrams of systems in accordance with disclosed embodiments.
Figure 2 shows a flowchart in accordance with disclosed embodiments.
Figure 3A, Figure 3B, Figure 3C, Figure 3D, Figure 3E, and Figure 3F show examples in accordance with disclosed embodiments.
Figure 4A and Figure 4B show computing systems in accordance with disclosed embodiments.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

In general, embodiments of the disclosure implement hybrid artificial intelligence (AI) generated actionable recommendations. It is difficult for computing applications to identify a set of actions (referred to as an action set) to take in response to an event. Certain actions, even when combined with others, may not resolve the issue corresponding to the event. Some actions may be disfavored by certain users.

Embodiments of the disclosure include computing systems that determine the possible actions that may be performed by a computing system in response to an event and then identify a filtered set of actions (referred to as a filter action set) that may be taken by a computing system based on user preferences. With the filtered action set, the system may identify a set of actions (referred to as a reduced objective set) having a lowest objective value for addressing the issue identified by the event and another set of actions (referred to as an increased probability set) with a maximum probability of success for addressing the issue identified by the event. The computing system may receive a selection between the reduced objective set and the increased probability set and performed the actions identified by the selected set.

In one embodiment, a user accesses a service hosted by a computing system through a web interface. The computing system maintains information for the user and identifies events based on the information. In response to an event, the computing system notifies the user of the event and of the actions that may be performed in response to the event. The actions may be identified by the computing system by processing the event with rules for the event (referred to as event rules). The computing system may receive selections from the user to identify acceptable actions. The computing system processes the actions with rules for the actions (action rules) to determine a filtered set of actions (referred to as a filtered action set). The action rules may implement the selections of acceptable actions received from the user. The computing system processes the filtered actions with rules for the actions (action rules) to determine sets of actions that are optimized to the event that was detected. User may select from a reduced objective set and an increased probability set. In one embodiment, the reduced objective set is the set of actions with a lowest combined objective value for addressing the issue identified by the event. In one embodiment, the increased probability set is the set of actions with the highest probability for addressing the issue identified by the event.

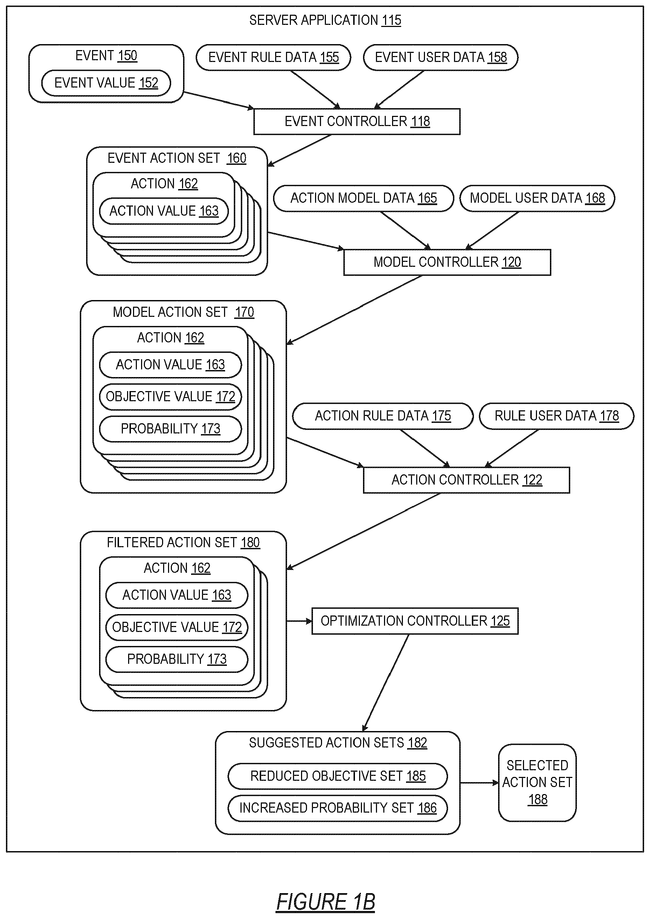

An event (e.g., the event 150 of Figure 1B) is a change in data that is identified by a computing system. An event may be stored as structured text (e.g., JavaScript object notation (JSON) text), which may use key value pairs. For example, the structured text below identifies an event with an identifier, a description, and a value. The event identifier is a value that disambiguates one type of event from other types of events. The event description is a textual description of the event that may describe a practical meaning of the event. The event value is a quantification of the event. The event value may be used as a threshold to be satisfied in order to address the issue that triggered the event. In one embodiment, the combined action value of a set of actions (i.e., an action set) may satisfy the threshold when the combined action value is larger than the event value.

```
 {
 "Event Identifier": "503984",
 "Event Description": "shortfall",
 "Event Value": "8479"
 }
```

An action (e.g., the action (162) of Figure 1B) is a set of instructions that may be performed by a computing system to address an event. An action may be stored as structured text (e.g., JavaScript object notation (JSON) text), which may use key value pairs. For example, the structured text below identifies an action with key value pairs for an identifier, a description, and a value. The action identifier is a value that disambiguates one type of action from other types of actions. The action description is a textual description that may describe a practical meaning of the action.

The action value (e.g., the action value (163) of Figure 1B) is a quantification of the action that is in the same relative space as an event value (e.g., the event value (152) of Figure 1B). The action value below ("9381") may satisfy the threshold of the event value above ("8479") by being greater than the event value above. Satisfaction of the threshold indicates that performance of the action below may be sufficient to resolve the event identified above.

The objective value (e.g., the objective value (172) of Figure 1B) is a quantification of the action that is relative to other actions and numerically represents a detrimental aspect of performing an action. When determining a set of actions, the combined objective value (formed from combining the objective values of the actions) may be minimized to find a set of actions that have a lowest combined objective value and that have a combined action value that is greater than or equal to an event value.

The probability (e.g., the probability (173) of Figure 1B) is the probability that the action may be successfully performed. When determining a set of actions, the combined probability (formed from combining the probabilities of the actions) may be maximized to find a set of actions that have a highest combined probability and that have a combined action value that is greater than or equal to an event value.

The structured text of the action may reference or include code, that when executed by the computing system, performs the action. The code may be written using programming languages, scripting languages, machine languages, etc. In one embodiment, a code may be referenced and retrieved using the action identifier, an action type, a uniform resource locator (URL), etc., which may be included within the structured text of the action. In one embodiment, the code may be included as a value in a key value pair in the structure text.

```
 {
 "Action Identifier": "721803",
 "Action Description": "request acceleration",
 "Action Value": "9381"
 "Objective Value": "325"
 "Probability": ".882"
 }
```

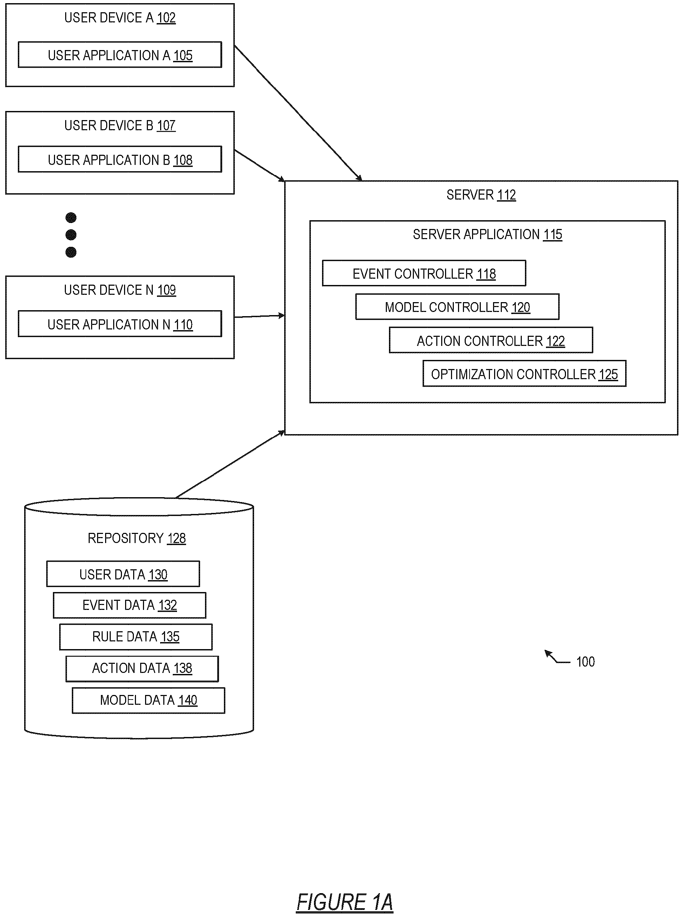

A rule (including those stored in the rule data (135) of Figure 1A) identifies an output from an input. Rules may include event rules and action rules. Event rules identify actions that may be performed in response to an event. Action rules identify actions that may be allowed or disallowed based on a type of event. Different action rules may be used with different users. A rule may be stored as structured text (e.g., JavaScript object notation (JSON) text), which may use key value pairs.

The structured text below identifies a rule (an event rule as may be defined in the event rule data (155) of Figure 1B) with key value pairs for a rule identifier, a rule type, an event identifier, and an action identifier. The rule identifier is a value that disambiguates one type of rule from other types of rules with each type of rule having a unique value. The rule type identifies the type of rule (e.g., "event rule"). The event identifier identifies the event which may trigger the rule. The action identifier identifies the action which may be performed in response to the event identified with the event identifier. The structured text of the rule may reference or include code, that when executed by the computing system, processes the rule. The code may be written using programming languages, scripting languages, machine languages, etc. In one embodiment, the code is written using a logic programming language (e.g., Prolog). The code may be referenced and retrieved using the rule identifier, a uniform resource locator (URL), etc., which may be included within the structured text of the rule. In one embodiment, the code may be included as a value in a key value pair in the structure text. The code for the rule may specify additional data and calculations to be performed to determine if the rule is satisfied so that the action identified by the rule may be performed in response to the event. In one embodiment, the rule identified by the structured text below may reference code that requires an account of a user to have a value that satisfies a threshold (e.g., "account_value > threshold_value").

```
 {
 "Rule Identifier": "803921",
 "Rule Type": "event rule",
 "Event Identifier": "503984",
 "Action Identifier": "721803"
 }
```

As another example, the structured text below identifies a rule (an action rule as may be defined in the action rule data (175) of Figure 1B) with key value pairs for a rule identifier, a rule type, an action identifier, and an allowed value. The rule identifier is a value that disambiguates one type of rule from other types of rules. The rule type identifies the type of rule (e.g., "action rule"). The action identifier identifies the action which may trigger processing of the rule. The allowed value identifies whether performance of the action is allowed when the rule is satisfied. Satisfaction of the rule is determined by processing the code referenced by the rule. In one embodiment, the rule identified by the structured text below may reference code that requires a user to be a member of a group (e.g., "member_of(user_identifier, group_identifier)").

```
 {
 "Rule Identifier": "673229",
 "Rule Type": "action rule",
 "Action Identifier": "721803"
 "allowed": "true",
 }
```

Different embodiments may use different data structures and standards to store the events, actions, and rules used by the system. For example, a database may be used with different tables for the events, actions, and rules.

The figures of the application show diagrams of embodiments that are in accordance with the disclosure. The embodiments of the figures may be combined and may include or be included within the features and embodiments described in the other figures of the application. The features and elements of the figures are, individually and as a combination, improvements to the technology of hybrid artificial intelligence computing systems. The various elements, systems, components, and steps shown in the figures may be omitted, repeated, combined, and/or altered as shown from the figures. Accordingly, the scope of the present disclosure should not be considered limited to the specific arrangements shown in the figures.

Turning to Figure 1A, the system (100) implements hybrid AI (artificial intelligence) generated actionable recommendations. The recommendations are provided by the system (100) as sets of actions (i.e., action sets) that may be performed by the system (100) in response to an event. Users operate the user devices A (102), B (107), and N (109) to access applications, such as websites, services, etc., that may be hosted by or connected to the server (112). Users access the system (100) to manage and manipulate information stored in the user data (130). User data (130) is processed to identify events stored in the event data (132). The server (112) processes the events using rules, action, and models to identify and execute action sets based on the events. An action set is a set of one or more actions. The system (100) includes the user devices A (102), B (107), and N (109), the server (112), and the repository (128).

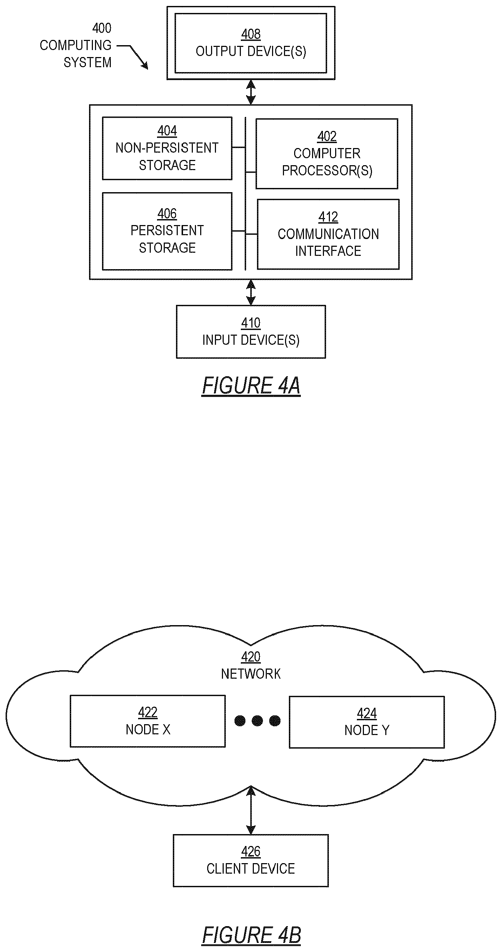

The server (112) is a computing system (further described in Figure 4A). The server (112) may include multiple physical and virtual computing systems that form part of a cloud computing environment. In one embodiment, execution of the programs and applications of the server (112) is distributed to multiple physical and virtual computing systems in the cloud computing environment. The server (112) includes the server application (115).

The server application (115) is a collection of programs that may execute on multiple servers of a cloud environment, including the server (112). The server application (115) processes the event data (132), the rule data (135), the action data (138), and the model data (140) using the event controller (118), the model controller (120), the action controller (122), and the optimization controller (125) to identify and execute action sets based on the events from the event data (132) and based on inputs received from the user devices A (102), B (107), and N (109). In one embodiment, the server application (115) may host services accessed by users of the user devices A (102) through N (109). The services hosted by the server application (115) may serve structured documents (hypertext markup language (HTML) pages, extensible markup language (XML) pages, JavaScript object notation (JSON) files and messages, etc.). The server application (115) includes the model controller (120), the action controller (122), and the optimization controller (125).

The event controller (118), the model controller (120), the action controller (122), and the optimization controller (125) are collections of programs that may operate on the server (112)

The event controller (118) is a collection of programs that may operate on the server (112). The event controller (118) processes events, from the event data (132), to identify rules, from the rule data (135), that may be performed in response to certain events.

The model controller (120) is a collection of programs that may operate on the server (112). The model controller (120) processes the user data (130) with models from the model data to generate information stored in the action data (138). The models include machine learning models that identify objective values and probabilities for the actions that may be performed in response to an event.

The action controller (122) is a collection of programs that may operate on the server (112). The action controller (122) filters the set of actions, which may be performed response to an event, to generate a filtered action set based on action rules from the rule data (135). The action rules may be specific to individual users.

The optimization controller (125) is a collection of programs that may operate on the server (112). The optimization controller (125) processes the filtered action set to generate suggested sets of actions. The suggested sets of actions may include a set of actions that minimizes an objective value of the set of actions. The suggested sets of actions may include a set of actions that maximizes a probability of the set of actions.

The user devices A (102) and B (107) through N (109) are computing systems (further described in Figure 4A). For example, the user devices A (102) and B (107) through N (109) may be desktop computers, mobile devices, laptop computers, tablet computers, server computers, etc. The user devices A (102) and B (107) through N (109) include hardware components and software components that operate as part of the system (100). The user devices A (102) and B (107) through N (109) communicate with the server (112) to access and manipulate information, including the user data (130). The user devices A (102) and B (107) through N (109) may communicate with the server (112) using standard protocols and file types, which may include hypertext transfer protocol (HTTP), HTTP secure (HTTPS), transmission control protocol (TCP), internet protocol (IP), hypertext markup language (HTML), extensible markup language (XML), etc. The user devices A (102) and B (107) through N (109) respectively include the user applications A (105) and B (108) through N (110).

The user applications A (105) and B (108) through N (110) may each include multiple programs respectively running on the user devices A (102) and B (107) through N (109). The user applications A (105) and B (108) through N (110) may be native applications, web applications, embedded applications, etc., and may present and display information to users. In one embodiment, the user applications A (105) and B (108) through N (110) include web browser programs that display web pages from the server (112). In one embodiment, the user applications A (105) and B (108) through N (110) provide graphical user interfaces that display financial management software and services hosted by the system (100).

The user application A (105) may be used by a user to view account information hosted by the system (100). The account information may be stored as part of the user data (130). The system (100) may identify an event based on the account information and present a notification of the event to the user through the user application A (105). The system may present set of actions to the user to resolve the event. The user application A (105) may receive a selection of a set of actions and transmit the selection to the server (112). In response, the server (112) may perform the set of actions.

As an example, a user may login to the system (100) to view a financial account. The system (100) may identify a low cash flow event and may identify sets of actions to resolve the low cash flow event. In one embodiment, the actions may include applying for a loan, requesting accelerated payments from customers, delaying payments to providers, etc. The different actions may be performed by the system (100) by executing code, corresponding to the actions, in response to a selection of a set of actions from the user. The code may be executed in response to receiving an approval from a user through one of the user devices A (102) and B (107) through N (109).

As another example, the user device N (109) may be used by a developer to maintain the software application hosted by the server (112). Developers may edit, update, and maintain the rules stored in the rule data (135) and the models stored in the model data (140).

The repository (128) is a computing system that may include multiple computing devices in accordance with the computing system (400) and the nodes (422) and (424) described below in Figures 4A and 4B. The repository (128) may be hosted by a cloud services provider that also hosts the server (112). The cloud services provider may provide hosting, virtualization, and data storage services as well as other cloud services and to operate and control the data, programs, and applications that store and retrieve data from the repository (128). The data in the repository (128) includes the user data (130), the event data (132), the rule data (135), the action data (138), and the model data (140). In one embodiment, the data in the repository (128), including events, rules, and actions, is stored as records with text strings and numerical values in one or multiple databases or files.

The user data (130) is data that relates to a user. The user data (130) include profile information describing an individual user. The user data (130) may further include account information describing transactions related to the user. In one embodiment, account information is financial account information that includes records of payments from customers to the user, payments made from the user to creditors, transfers, etc.

The event data (132) is data that describes events. Different events may use different algorithms to identify the presence of an event in the user data (130). For example, a "low cash flow" event may be identified when a projected monthly income is less than a projected monthly expense amount. Multiple programs may be used to identify the events that are stored in the repository (128) in the event data (132). In one embodiment, when an event is detected, the event is saved to the repository (128) and sent to the server (112) for processing.

The rule data (135) is data that forms the rules used by the system (100). The rules of the rule data (135) include event rules and action rules.

The event rules identify actions that may be performed in response to an event. An event rule may include instructions for processing information from the user data (130) (e.g., the event user data (158) of Figure 1B) to determine if the action, identified by the event rule, may be performed in response to the event, identified by the event rule.

As an example, the following event rule (written using Prolog) selects all bills if the user is a business (represented by "smb") that has at most 20 employees:
isPossible(bill(C, D, E, F, G)) :- employee(smb, A), length(A, B), B =< 20, hasBill(smb, C), bill(C, D, E, F, G).

As another example, the following event rule (written using Prolog) selects all customers that do not have a premium membership contract:
isPossible(customer(A, B, C, D)) :- customer(A, B, C, D), hasCustomer(smb, A), \+isPremiumMember(A)

An action rule may include instructions for processing information from the user data (130) (e.g., the rule user data (178) of Figure 1B) to determine if the action, identified by the action rule, may be performed for a particular user.

Examples of action rules (written using Prolog) are below. For the purpose of computing relevant actions, the isRelevant query predicate is used. Relevant bills and customers are obtained by evaluating isRelevant(X) are passed on to the next step of computing optimal plans.

The following action rule selects all bills that are not delayed and whose amount is at most 1500: isRelevant(bill(X,T,A,C,0)) :- isPossible(bill(X,T,A,C,0)),A =< 1500.

The following action rule selects all utility bills that are not delayed and whose amount is at most 5000:
isRelevant(bill(X,"Utility",A,C,0)) :- isPossible(bill(X,"Utility",A,C,0)), A =< 5000.

The following action rule selects all customers that owe at most 5000: isRelevant(customer(X,A,C,P)) :- isPossible(customer(X,A,C,P)), A =< 5000.

The following action rule selects all customers that will pay with a probability higher than 0.9: isRelevant(customer(X,A,C,P)) :- isPossible(customer(X,A,C,P)),P >= 0.9.

The action data (138) is data that describes actions. An action is a set of instructions that may be performed by the system (100) in response to an event identified and stored in the event data (132). Different actions may have different sets of instructions that operate using the user data (132). In one embodiment, actions that may be performed automatically by the system (100) include applying for a loan, requesting accelerated payments from customers, delaying payments to creditors, etc.

The set of instructions to apply for a loan may include instructions that, when executed by the system (100), transfer financial account information from the user data (130) to an application processing computer system and receive results from the application processing computer system. In one embodiment, the set of instructions to apply for a loan may include instructions that, when executed by the system (100) displays a set of directions to apply for a loan,. The set of instructions to request accelerated payments from customers may include instructions that, when executed by the system (100), identify records of customers that are able to make early payments, and transmit messages requesting early payment to the computer systems of the customers that are able to make early payment. The messages may include discounts to the amount of payment when payment is made early. Responses from customers may be processed automatically by the system (100). The set of instructions to delay payments to creditors may include instructions that, when executed by the system (100), identify records of creditors for which payments may be delayed and change the dates for which payments are made to be creditors. The sets of instruction executed by the system (100) may be executed in response to receiving approvals from the user devices A (102) and B (107) through N (109) from individual users.

The model data (140) is data that describes models used by the system (100). The models include machine learning models that predict the objective values and probabilities for the different actions that may be performed by the system (100) in response to an event. The model data (140) may include the machine learning models and the data (or references thereto) used by the machine learning models to make predictions (e.g., the model user data (168) of Figure 1B).

Turning to Figure 1B, the server application (115) processes the event (150) to generate the selected action set (188). The server application (115) processes the event (150) using the event controller (118), the model controller (120), the action controller (122), and the optimization controller (125).

The event controller (118) processes the event (150) using the event rule data (155) and the event user data (158) to generate the event action set (160). The event controller (118) includes the hardware and software components operating as part of the server application (115).

The event (150) is an event triggered by an analysis of the user data (130) (of Figure 1A). The event (150) may be detected by an external process and transmitted to the server application (115). The event (150) includes the event value (152).

The event value (152) is a value for the event (150). In one embodiment, the event value (152) is in the same space as the objective values (e.g., the objective value (172) of the action (162)) so that an event may be resolved when a set of actions are performed that have objective values that combine to satisfy the event value (152). For example, an event with an event value of "8237" (which may represent a cashflow shortfall) may be resolved by an action with an objective value of "8500" (which may represent proceeds from a loan, proceeds from accelerated payments from customers, a delayed payments to creditors, etc.)

The event rule data (155) is a subset of the rule data (135) (of Figure 1A) that defines the rules for processing the event (150). Each event may be associated with multiple rules. Each rule may specify one or multiple actions that may be performed in response to the event (150). A rule from the event rule data (155) may be processed with the event user data (158) to determine if the rule applies to the event (150).

The event user data (158) is a subset of the user data (130) (of Figure 1A) that is used to process the rules of the event rule data (155). The rules of the event rule data (155) are processed by the event controller (118) to identify the actions (including the action (162)) of the event action set (160).

The event action set (160) is the set of actions (including the action (162)) that may be performed in response to the event (150). The actions (including the action (162)) of the event action set (160) include an action value (e.g., the action value (163)).

The action (162) is an action identified from the event rule data (155) by the event controller (118) that may be performed in response to the event (150). The action (162) includes the action value (163).

The action value (163) is a value of the action (162). The action value (163) is in the same relative space as the event value (152) so that a larger (or smaller) value may have a larger (or lesser) impact with respect to the event value (152).

The event controller (118) receives the event (150). Responsive to the event (150), the event controller (118) identifies the event rule data (155) from the rule data (135) (of Figure 1A) and the event user data (158) from the user data (130) (of Figure 1A). The event controller (118) processes rules from the event rule data (155) using the event user data (158) to identify the actions (including the action (162)) of the event action set (160), which may be input to the model controller (120).

The model controller (120) processes the event action set (160) using the action model data (165) and the model user data (168) to generate the model action set (170). The model controller (120) includes the hardware and software components operating as part of the server application (115).

The action model data (165) is a subset of the model data (140) (of Figure 1A). The action model data (165) includes the machine learning models that process the model user data (168) to generate the objective values (including the objective value (172)) and the probabilities (including the probability (173)) of the actions (including the action (162)) of the model action set (170). The actions of the event action set (160) may be processed with one or multiple models from the action model data (165) to generate the objective values and probabilities of the actions. The action model data (165) may specify the subset of the user data (130) (of Figure 1A) that forms the model user data (168).

The model user data (168) is a subset of the user data (130) (of Figure 1A) that is used by the models of the action model data (165). Different models may use different subsets of data from the user data (130) (of Figure 1A).

The model action set (170) is a modified version of the event action set (160). The actions (including the action (162)) of the model action set (170) are modified to include the objective values (including the objective value (172)) and the probabilities (including the probability (173)).

The objective value (172) is a value of the action (162) that quantifies the relative cost of performing the action (162) by the system (100). The objective value (172) may identify the relative value of an action compared to other actions of the model action set (170). The objective value (172) is generated by the model controller (120) with a machine learning model from the action model data (165).

The probability (173) is a value of the action (162) that identifies a likelihood that the action (162) will be successfully performed by the system (100) to help resolve the issue identified by the event (150). The probability (173) is generated by the model controller (120) with a machine learning model from the action model data (165).

The model controller (120) receives the event action set (160). The model controller (120) identifies the machine learning models of the action model data (165) that correspond to the actions in the event action set (160). The model controller (120) identifies the model user data (168) that is used by the models of the action model data (165). The model controller (120) executes the models using the model user data (168) and stores the results (the objective values and probabilities) to the actions of the model action set (170), which is input to the action controller (122).

The action controller (122) processes the model action set (170) using the action rule data (175) and the rule user data (178) to generate the filtered action set (180). The action controller (122) includes the hardware and software components operating as part of the server application (115).

The action rule data (175) is a subset of the rule data (135) (of Figure 1A) that defines the rules for processing the actions (including the action (162)) of the model action set (170). One action may be associated with multiple rules. A rule may specify whether an action is allowed or disallowed with respect to the event (150). Different users may have different rules. A rule from the action rule data (175) may be processed with the rule user data (178) to determine if an action may form part of the filtered action set (180).

The rule user data (178) is a subset of the user data (130) (of Figure 1A) that is to process the rules of the action rule data (175). Different rules may use different subsets of data from the user data (130) (of Figure 1A).

The filtered action set (180) is a filtered version of the model action set (170). The filtered action set (180) includes the same or fewer actions than the model action set (170).

The action controller (122) receives the model action set (170). The action controller (122) identifies the rules of the action rule data (175) that correspond to the actions in the model action set (170). The action controller (122) identifies the rule user data (178) that is used by the rules of the action rule data (175). The action controller (122) executes the rules using the rule user data (178) and removes actions from the model action set (170) to form the filtered action set (180), which is input to the optimization controller (125).

The optimization controller (125) processes the filtered action set (180) using the objective values (including the objective value (172)) and probabilities (including the probability (173)) to generate the suggested action sets (182). The optimization controller (125) includes the hardware and software components operating as part of the server application (115).

The suggested action sets (182) are output from the optimization controller (125) that includes multiple sets of actions that may be taken in response to the event (150). The suggestion sets (182) include reduced objective set (185) and the increased probability set (186).

The reduced objective set (185) is a set of actions having a reduced objective value. The reduced objective set (185) is the set of actions, from the filtered action set (180), having a minimized combined objective value and a combined action value that satisfies the event value (152). In one embodiment, the objective values from the different actions forming the reduce objective set (185) are summed together to form the combined objective value. In one embodiment, the action values from the different actions forming the reduce objective set (185) are summed together to form a combined action value that is greater than the event value (152).

The increased probability set (186) is a set of actions having an increased probability. The increased probability set (186) is the set of actions, from the filtered action set (180), having a maximized combined probability and a combined action value that satisfies the event value (152). In one embodiment, the probabilities from the different actions forming the increased probability set (186) are multiplied together to form the combined probability. In one embodiment, the action values from the different action forming the increased probability set (186) are summed together to form a combined action value that is greater than the event value (152).

The optimization controller (125) receives the filtered action set (180). In one embodiment, the optimization controller (125) uses a simplicial homology global optimization (SHGO) algorithm to identify the reduced objective set (185) using the objective values of the actions from the filter action set (180) and to identify the increased probability set (186) using the probabilities of the actions from the filter action set (180).

The selected action set (188) is the set of actions that is selected to be executed. The selected action set (188) may be the reduced objective set (185) or the increased probability set (186). The selected action set (188) may be selected by a user of the system in response to presentation of the reduced objective set (185) or the increased probability set (186). The selected action set (188) may be executed by the system (100). In one embodiment, the selected action set (188) may include actions with instructions that, when executed, display lists of recommendations and directions to a user.

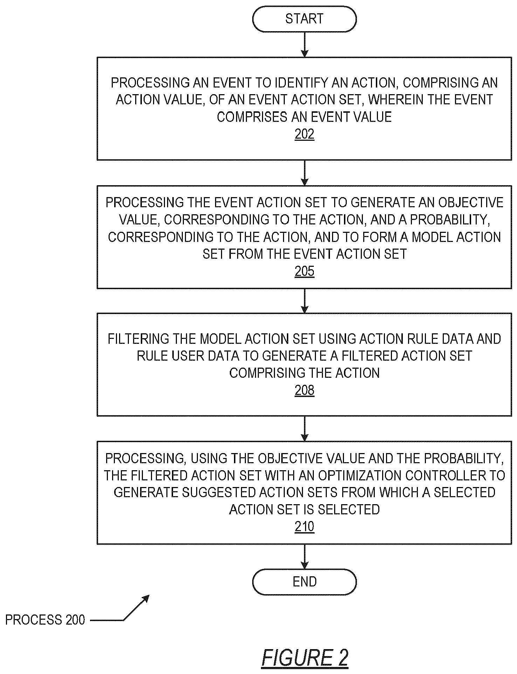

Turning to Figure 2, the process (200) implements hybrid AI generated actionable recommendations by identifying action sets from events. The process (200) may be performed by a server using a client server architecture.

At Step 202, an event is processed to identify an action, having an action value, of an event action set. The event includes an event value. In one embodiment, the event is processed by searching rule data for rules that identify the event as a trigger. The rules in the rule data may store an event identifier that matches to an event identifier of the event.

In one embodiment, the event is mapped to the action using an event rule from the event rule data. The event rule includes instructions written using a logic programming language (e.g., Prolog). The event is mapped to the action by executing the instructions for the event rule.

In one embodiment, the event may be identified from user data using an event model. The event model specifies a model and a subset of user data for identifying an event. For example, the user data may be a monthly cash-flow amount. The model may be a threshold where, if the monthly cash-flow amount is below the threshold, then event is triggered and then processed by the system.

In one embodiment, after the event is identified, a notification is transmitted to a user device. The user device displays the notification on a user interface of the user device and prompts the user to select whether to continue to process the event and identify suggested sets of actions in response to the event.

At Step 205, the event action set is processed to generate an objective value (corresponding to the action) and a probability (corresponding to the action) and to form a model action set from the event action set. Objective values and probabilities may be generated for the actions identified in the event action set. One action may correspond to one model (or a pair of models) that identifies the objective value and the probability for the action. The models may be machine learning models that use machine learning techniques, including, random forest algorithms, neural network algorithms, gradient descent algorithms, etc. An action may specify the model and user data to which the action corresponds in the record of the action with a model identifier and a user data identifier. The system loads the specified model with the specified user data and saves the calculated objective value and probability to the record of the action.

In one embodiment, model input data, selected from the model user data, is input to a machine learning model, selected from action model data, to generate the objective value and the probability for the action. The model input data may be specified with a user data identifier and the model may be specified with a model identifier.

In one embodiment, the event action set, action model data, and model user data processed to generate a plurality of objective values and a plurality of probabilities using a plurality of machine learning models to form the model action set. Different actions may specify the use of different models. One machine learning model may be used to calculate the objective values or probabilities for multiple actions.

At Step 208, the model action set is filtered using action rule data and rule user data to generate a filtered action set comprising the action. In one embodiment, an action rule includes instructions written using a logic programming language (e.g., Prolog). The action is mapped from the model action set to the filtered action set by executing the instructions for the action rule.

In one embodiment, the model action set that was generated in response to the event is displayed. The model action set may be transmitted to a user device that displays the actions from the model action set in a user interface. The user may select actions that are allowed or disallowed from being executed in response to the event. The selection by the user that allows or disallows execution of an action may be converted to an action rule, which may be automatically applied to event sets.

At Step 210, the filtered action set is processed, using the objective value and the probability, with an optimization controller to generate suggested action sets from which a selected action set is selected. The selected action set corresponds to a combined action value, generated with the action value, that satisfies the event value. In one embodiment, the filtered action is processed using a global optimization algorithm, such as a simplicial homology global optimization (SHGO) algorithm.

In one embodiment, the suggested action sets are presented to a user device. The suggested action sets may be transmitted to a displayed user device. The suggested action sets may be generated response to filtering the model action set. The suggested action sets are generated by processing a filtered action set with an optimization controller.

In one embodiment, a selection, from the suggested action sets, of the selected action set is received from a user device, the user may select between a reduced objective set and an increased probability set.

In one embodiment, the selected action set is executed in response to the selection from the suggested action sets.

In one embodiment, the action from the selected action set is executed. The actions may be executed by performing sets of instructions that corresponds to the actions of the selected action set.

In one embodiment, an action identifies a set of instructions that, when executed, transmits a message. In one embodiment, the message may include a loan application that is transmitted to a computing system of a creditor. In one embodiment, the message may include recommendations, directions, instructions, etc., displayed to the user (e.g., in a popup), for submission of the loan application.

In one embodiment, the message may include a request for early payment that is transmitted to a computing system of a customer. Multiple messages may be transmitted, one for each customer of a user.

In one embodiment, the action identifies a set of instructions that, when executed, delays a transaction. The delay may be performed automatically by sending a set of instructions to an application programming interface that prevents payment from an account at the user to an account of a creditor. In one embodiment, the message may include recommendations, directions, instructions, etc., displayed to the user (e.g., in a popup), for delaying a payment. For example, a popup may state "call your utility company to delay this bill".

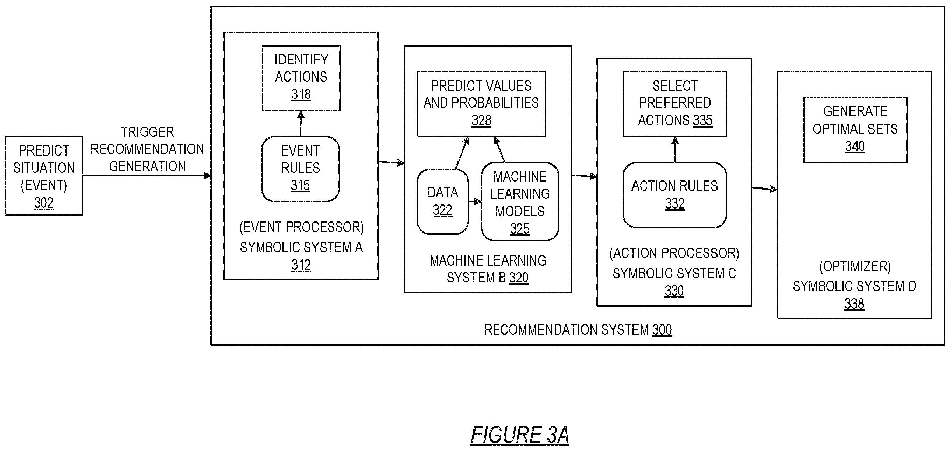

Turning to Figure 3A, the recommendation system (300) is an example of a system that implements hybrid AI (artificial intelligence) generated actionable recommendations. The recommendation system (300) is a hybrid system that uses the symbolic systems A (312), C (330), and D (338) with the machine learning system B (320) to generate the optimal sets with the generate optimal sets (340) from an event predicted with the predict situation (event) (302).

The predict situation (event) (302), which may be an external process, predicts a situation that is identified as an event. The prediction triggers generation of a recommendation by the recommendation system (300). A record of the event is stored and transmitted to the recommendation system (300).

The symbolic system A (312) is a computing system that processes the events predicted by the process (302) using symbolic algorithms. The symbolic system A (312) processes an event using the process (318) with the event rules (315).

The event rules (315) are rules that identify actions which may be taken in response to an event. The event rules (315) may be stored as records in a database. A rule may have a corresponding symbolic algorithm (e.g., a logic equations) for processing user data to identify whether an action specified by the rule may be performed in response to the action.

The process (318) is a computer process that processes an event to identify actions using the event rules (315). The process (318) receives an event, identifies the rules that may be triggered by the event, executes the algorithms specified by the rules that may be triggered by the event, and generates an event action set containing the actions that may be performed in response to the event. The event action set may be stored as a record and transmitted to the machine learning system B (320).

The machine learning system B (320) is a computing system that processes event action sets from the symbolic system A (312) using the machine learning models (325). The machine learning system B (320) processes the actions of an event action set using the process (328) with the data (322) and the machine learning models (325).

The data (322) is the data used by the machine learning models (325) predicting you get the values and probabilities are the actions of an event action set. A machine learning model may utilize a unique set of data from a larger set of data of that corresponds to a user of the recommendation system (300).

The machine learning models (325) are the machine learning models used by the process (328) to predict values and probabilities for actions. The machine learning models (325) may include a number of different types of machine learning models, including random forest models, neural network models, etc.

The process (328) predicts values and probabilities for actions from an event action set from the symbolic system A (312) from the data (322) using the machine learning models (325). The process (328) identifies an action from the event action set, identifies a model that corresponds to the action, and identifies the subset of the data (322) to user for the model for the action. The model for the action and the subset of the data for the model may be specified in values a record of the action. The process (328) inputs the corresponding data to the corresponding model to generate objective value and a probability for the action. The objective value and the probability may be stored with the record of the action. The process (328) updates the records of the actions from the event action set with objective values and probabilities to generate a model action set. The model action set it transmitted to the symbolic system C (330).

The symbolic system C (330) is a computing system that processes the actions from the model action set using symbolic algorithms. The symbolic system C (330) processes an action using the process (335) with the action rules (332).

The action rules (332) are rules that identify actions which may be taken in response to an event. The action rules (332) may be specific to a particular user of the recommendation system (300). Different action rules (332) may be used for different users update system. The action rules (332) may be stored as records in a database. A rule may have a corresponding symbolic algorithm (e.g., a logic equations) for processing user data to identify whether an action specified by the rule may be performed in response to the action. An action rule may be specified in response to a user input. For example, actions from the model action set may be presented in a user interface to a user who may then select the actions that may be taken in response to an event. The selections may be stored as part of the action rules (332) and be automatically applied to future actions processed with the recommendation system (300).

The process (335) selects preferred actions from the model action set. In one embodiment, the process (335) identifies an action from the model action set, identifies the rules corresponding to the action, and applies the rules to the action to determine whether the action may be presented as part of a filtered action. The process (335) generates a filtered action set that includes the actions from the model action set that have either been allowed by the action rules (332) or have not been disallowed by the action rules (332). The filtered action set may have a reduced number of actions as compared to the novel action set, be stored as a record, and transmitted to the symbolic system D (338).

The symbolic system D (338) is a computing system that processes the actions from the filtered action set using symbolic algorithms. The symbolic system D (338) processes a filtered action set using the process (340).

The process (340) generates optimal sets from the filtered action set. The process (340) may generate a reduced objective set and an increased probability set. The reduced objectives set is a set of actions with a minimized combined objective value. The increased probability set is a set of actions with a maximized combined probability that the actions will be successfully performed and resolve the event predicted by the process (302). The reduced objective set and the increased probability set are the optimal sets (e.g., suggestions) that may be presented to a user and from which the user may select a set of actions to be performed in response to the event predicted by the process (302).

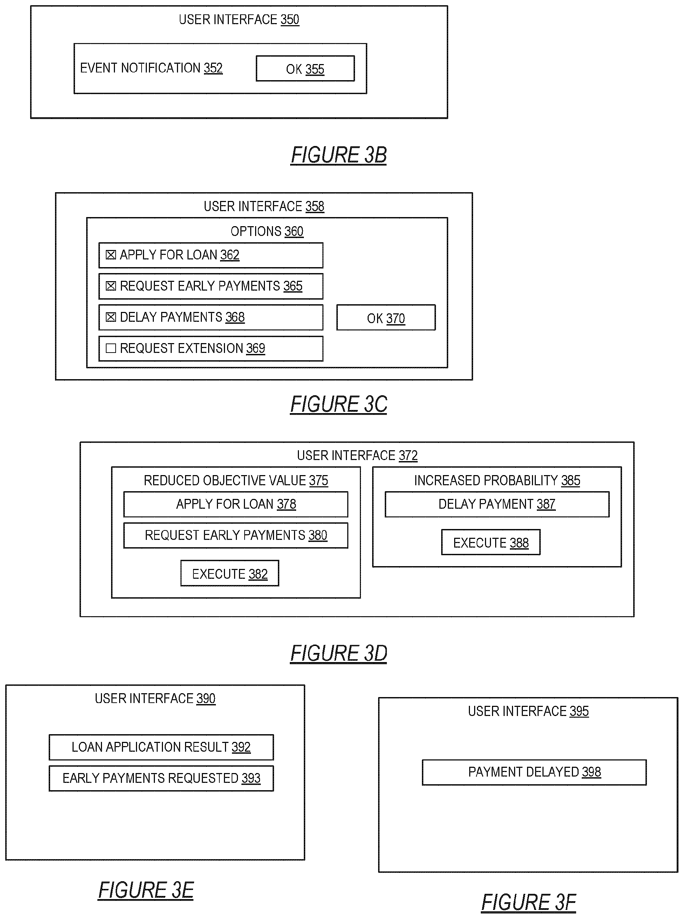

Figures 3B through 3F show examples of user interfaces for users interacting with the system (300) of Figure 3A. The user interfaces (350), (358), (372), (390), and (395) may be displayed on a user device that connects to the recommendation system (300) of Figure 3A.

Turning to Figure 3B, the user interface (350) is displayed with the event notification (352) and the button (355). The user interface (350) is displayed in response to receiving a notification of an event, e.g., an event predicted by the process (302) of Figure 3A.

The event notification (352) identifies to the user that an event has been predicted. As an example, the event may be a low cash flow event in which it is predicted that an account of the user may not record cash flow sufficient to process record expenses. In one embodiment, the event notification (352) may include a textual description of the event, e.g., "low cash flow warning".

The button (355) prompts the user to acknowledge the event. In one embodiment, clicking the button (355) triggers processing of the event with the recommendation system (300) of Figure 3A. In one embodiment, the recommendation system (300) processes the event generate an event action set and then a model action set.

Turning to Figure 3C, the user interface (358) is updated from the user interface (350) (of Figure 3A) to display the options window (360). In one embodiment, the user interface (358) is displayed in response to receiving a message from the recommendation system (300) of Figure 3A that includes a model action set.

The options window (360) displays the action widgets (362), (365), (368), and (369) that correspond to the actions from the model action set. In one embodiment, display of the options window (360) replaces display of the event notification (352) of Figure 3B.

The action widgets (362), (365), (368), and (369) include textual descriptions of the actions. The action widgets (362), (365), (368), and (369) also include checkboxes to receive selections for whether an action is allowed or disallowed by the user in response to the event. Selections of the checkboxes of the action widgets (362), (365), (368), and (369) may be saved by the recommendation system (300) of Figure 3A as event rules. Previous selections may be filled as a default choice and may the automatically applied to the processing of future events.

The action widget (362) is selected and corresponds to an action to execute a set of instructions to apply for a loan. In one embodiment, an amount of the loan may be proportional to the amount identified by the event. Additionally, an amount of the loan may be adjusted based on other actions that may be performed by the system. For example, when there is a shortfall of 3000 and a payment of 1000 is delayed, the amount of the loan may be adjusted to 2000 cover the remaining shortfall.

The action widget (365) is selected and corresponds to an action to execute a set of instructions to request early payments from customers. When executed by a computing system, the instructions may include transmitting messages to multiple customers requesting early payment from each customer and may offer a discount for an early payment.

The action widget (368) is selected and corresponds to an action to execute a set of instructions to delay payments to creditors. When executed by a computing system, the instructions may include transmitting messages to financial computing systems to prevent transfers from an account of the user to an account of a creditor until a specified date.

The action widget (369) is not selected and corresponds to an action to execute a set of instructions to request an extension from a creditor. When executed by a computing system, the instructions may include transmitting messages to creditor computing systems to submit a request for an extension of time in making a payment using an application programming interface of the creditor computing system.

The button (370) prompts the user to indicate that selections of the actions with the action widgets (362), (365), (368), and (369) is complete. Upon selection of the button (370), these selections are transmitted to the recommendation computing system (300) of Figure 3A and may be recorded as event rules. The recommendation computing system (300) of Figure 3A may then apply the event rules to the model action set generate a filtered action set and then process the filtered action set with an optimizer (e.g., the symbolic system D (338) of Figure 3A) to generate optimal sets.

Turning to Figure 3D, the user interface (372) is updated from the user interface (358) (of Figure 3C) to display the windows (375) and (385). In one embodiment, the user interface (372) is displayed in response to receiving a message from the recommendation system (300) of Figure 3A that includes suggested action sets with a reduced objective set and an increased probability set.

The window (375) corresponds to a reduced objective value set of actions. The window (375) provides access to information about the actions in the reduce objective set. The window (375) displays multiple user interface elements including the widget (378), the widget (380), and the button (382).

The widget (378) includes a textual description for an action "apply for loan". Selecting the widget (378) may present an information screen that provides additional information about the loan application including the type of loan and the information to be sent as part of the loan application. In one embodiment, a user may update the information sent as part of the loan using the information screen.

The widget (380) includes a textual description for an action "request early payments". Selecting the widget (380) may present an information screen that provides additional information about the request for early payments. For example, the information screen may include a table with columns that identify the customers (e.g., names), identify the contact information for the customers (e.g., email addresses), the amounts due, etc. The set of instructions for the action may trigger a request for early payment be sent to each of the customers from the table. In one embodiment, a user may identify and select individual customers to which early payments may be requested using the information screen.

The button (382) is labeled as an execute button. Selection of the button (382) triggers performance at the actions identified by the widgets (378) and (380) and may transition from the user interface (372) to the user interface (390) of Figure 3E.

The window (385) corresponds to an increased probability set of actions. The window (385) provides access to information about the actions in the increased probability set. The window (375) displays multiple user interface elements including the widget (387) and the button (388).

The widget (387) includes a textual description for an action "delay payment". Selecting the widget (387) may present an information screen that provides additional information about the delaying payments. For example, the information screen may include a table with columns that identify the creditors (e.g., names), identify the contact information for the creditors (e.g., uniform resource locators (URLs)), the amounts due, etc. The set of instructions for the action may trigger a request for delayed payment be sent for each of the creditors from the table. In one embodiment, a user may identify and select individual creditors to which delayed payments may be requested using the information screen.

The button (388) is labeled as an execute button. Selection of the button (388) triggers performance at the action identified by the widget (387) and may transition from the user interface (372) to the user interface (395) of Figure 3F.

Turning to Figure 3E, the user interface (390) is updated from the user interface (372) (of Figure 3D) to display the widgets (392) and (393). The user interface (390) may be displayed in response to receiving a message that includes results of performing the actions from the reduced objectives set.

The widget (392) is labeled "loan application result". Selection of the widget (392) may display an information screen with details at the results of the loan application. The details may include the success of the application, the loan amount, the interest rate, etc.

The widget (393) is labeled "early payments requested". Selection of the widget (393) may display an information screen with a table of the results of the early payment messages sent to customers. Results may identify whether the requests were sent successfully and may identify whether payments have been received in response to the request.

Turning to Figure 3F, the user interface (395) is updated from the user interface (372) (of Figure 3D) to display the widget (398). The user interface (395) may be displayed in response to receiving a message that includes results of performing the action from the increased probability set.

The widget (398) is labeled "payment delayed". Selection of the widget (398) may display an information screen with a table of the results of the delay payment instructions. Results may identify the amounts of the payments that have been delayed.

Embodiments of the invention may be implemented on a computing system. Any combination of a mobile, a desktop, a server, a router, a switch, an embedded device, or other types of hardware may be used. For example, as shown in Figure 4A, the computing system (400) may include one or more computer processor(s) (402), non-persistent storage (404) (e.g., volatile memory, such as a random access memory (RAM), cache memory), persistent storage (406) (e.g., a hard disk, an optical drive such as a compact disk (CD) drive or a digital versatile disk (DVD) drive, a flash memory, etc.), a communication interface (412) (e.g., Bluetooth interface, infrared interface, network interface, optical interface, etc.), and numerous other elements and functionalities.

The computer processor(s) (402) may be an integrated circuit for processing instructions. For example, the computer processor(s) (402) may be one or more cores or micro-cores of a processor. The computing system (400) may also include one or more input device(s) (410), such as a touchscreen, a keyboard, a mouse, a microphone, a touchpad, an electronic pen, or any other type of input device.

The communication interface (412) may include an integrated circuit for connecting the computing system (400) to a network (not shown) (e.g., a local area network (LAN), a wide area network (WAN) such as the Internet, a mobile network, or any other type of network) and/or to another device, such as another computing device.

Further, the computing system (400) may include one or more output device(s) (408), such as a screen (e.g., a liquid crystal display (LCD), a plasma display, a touchscreen, a cathode ray tube (CRT) monitor, a projector, or other display device), a printer, an external storage, or any other output device. One or more of the output device(s) (408) may be the same or different from the input device(s) (410). The input and output device(s) (410 and 408) may be locally or remotely connected to the computer processor(s) (402), non-persistent storage (404), and persistent storage (406). Many different types of computing systems exist, and the aforementioned input and output device(s) (410 and 408) may take other forms.

Software instructions in the form of computer readable program code to perform embodiments of the invention may be stored, in whole or in part, temporarily or permanently, on a non-transitory computer readable medium such as a CD, a DVD, a storage device, a diskette, a tape, flash memory, physical memory, or any other computer readable storage medium. Specifically, the software instructions may correspond to computer readable program code that, when executed by a processor(s), is configured to perform one or more embodiments of the invention. A computer readable medium may also or alternatively include transient media such as carrier signals and transmission media.

The computing system (400) in Figure 4A may be connected to or be a part of a network. For example, as shown in Figure 4B, the network (420) may include multiple nodes (e.g., node X (422), node Y (424)). Each node may correspond to a computing system, such as the computing system (400) shown in Figure 4A, or a group of nodes combined may correspond to the computing system (400) shown in Figure 4A. By way of an example, embodiments of the invention may be implemented on a node of a distributed system that is connected to other nodes. By way of another example, embodiments of the invention may be implemented on a distributed computing system having multiple nodes, where each portion of the invention may be located on a different node within the distributed computing system. Further, one or more elements of the aforementioned computing system (400) may be located at a remote location and connected to the other elements over a network.

Although not shown in Figure 4B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (422), node Y (424)) in the network (420) may be configured to provide services for a client device (426). For example, the nodes may be part of a cloud computing system. The nodes may include functionality to receive requests from the client device (426) and transmit responses to the client device (426). The client device (426) may be a computing system, such as the computing system (400) shown in Figure 4A. Further, the client device (426) may include and/or perform all or a portion of one or more embodiments of the invention.

The computing system (400) or group of computing systems described in Figures 4A and 4B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (e.g., a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data sharing techniques described in the present application, between processes without departing from the scope of the invention. The processes may be part of the same or different application and may execute on the same or different computing system.

Rather than or in addition to sharing data between processes, the computing system performing one or more embodiments of the invention may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the invention, may extract one or more data items from the obtained data. For example, the extraction may be performed as follows by the computing system (400) in Figure 4A. First, the organizing pattern (e.g., grammar, schema, layout) of the data is determined, which may be based on one or more of the following: position (e.g., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as XML).

The extracted data may be used for further processing by the computing system. For example, the computing system (400) of Figure 4A, while performing one or more embodiments of the invention, may perform data comparison. Data comparison may be used to compare two or more data values (e.g., A, B). For example, one or more embodiments may determine whether A > B, A = B, A != B, A < B, etc. The comparison may be performed by submitting A, B, and an opcode specifying an operation related to the comparison into an arithmetic logic unit (ALU) (i.e., circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, etc. By selecting the proper opcode and then reading the numerical results and/or status flags, the comparison may be executed. For example, in order to determine if A > B, B may be subtracted from A (i.e., A - B), and the status flags may be read to determine if the result is positive (i.e., if A > B, then A - B > 0). In one or more embodiments, B may be considered a threshold, and A is deemed to satisfy the threshold if A = B or if A > B, as determined using the ALU. In one or more embodiments of the invention, A and B may be vectors, and comparing A with B requires comparing the first element of vector A with the first element of vector B, the second element of vector A with the second element of vector B, etc. In one or more embodiments, if A and B are strings, the binary values of the strings may be compared.

The computing system (400) in Figure 4A may implement and/or be connected to a data repository. For example, one type of data repository is a database. A database is a collection of information configured for ease of data retrieval, modification, re-organization, and deletion. A Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (e.g., join, full join, count, average, etc.), sort (e.g., ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system (400) of Figure 4A may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents only a few examples of functions performed by the computing system (400) of Figure 4A and the nodes (e.g., node X (422), node Y (424)) and/ or client device (426) in Figure 4B. Other functions may be performed using one or more embodiments of the invention.

The use of ordinal numbers (e.g., first, second, third, etc.) is not to imply or create any particular ordering of the elements (i.e., any noun in the application) nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

The invention is defined in the appended claims.

Thus there has been described a method implementing hybrid artificial intelligence generated actionable recommendations. The method includes processing an event to identify an action of an event action set. The event includes an event value. The method further includes processing the event action set to generate an objective value, corresponding to the action, and a probability, corresponding to the action, and to form a model action set from the event action set. The method further includes filtering the model action set using action rule data and rule user data to generate a filtered action set. The method further includes processing, using the objective value and the probability, the filtered action set with an optimization controller to generate suggested action sets from which a selected action set is selected. The selected action set corresponds to a combined action value that satisfies the event value.

Further examples of feature combinations taught by the present disclosure are set out in the following numbered clauses:
1. A method comprising:
   processing an event to identify an action, comprising an action value, of an event action set, wherein the event comprises an event value;
   processing the event action set to generate an objective value, corresponding to the action, and a probability, corresponding to the action, and to form a model action set from the event action set;
   filtering the model action set using action rule data and rule user data to generate a filtered action set comprising the action; and
   processing, using the objective value and the probability, the filtered action set with an optimization controller to generate suggested action sets from which a selected action set is selected, wherein the selected action set corresponds to a combined action value, generated with the action value, that satisfies the event value.
2. The method of clause 1, further comprising:
   executing the action from the selected action set, wherein the action identifies a set of instructions that, when executed, transmits a message.
3. The method of clause 1 or 2, further comprising:
   executing the action from the selected action set, wherein the action identifies a set of instructions that, when executed, delays a transaction.
4. The method of any preceding clause, further comprising:
   processing the action from the event action set by:
   inputting model input data, selected from model user data, to a machine learning model, selected from action model data, to generate the objective value and the probability for the action.
5. The method of any preceding clause, further comprising:
   for each action of the event action set, selecting a machine learning model.
6. The method of any preceding clause, further comprising:
   processing the filtered action set with the optimization controller using a global optimization algorithm.
7. The method of any preceding clause, further comprising:
   presenting the suggested action sets to a user device.
8. The method of any preceding clause, further comprising:
   receiving, from a user device, a selection, from the suggested action sets, of the selected action set.
9. The method of any preceding clause, further comprising:
   identifying the event from user data using an event model.
10. The method of any preceding clause, further comprising:
   mapping the event to the action using an event rule from event rule data, wherein the event rule comprises instructions written using a logic programming language.
11. The method of any preceding clause, further comprising:
   filtering the model action set by mapping the action from the model action set to the filtered action set using an action rule from the action rule data, wherein the action rule comprises instructions written using a logic programming language.
12. The method of any preceding clause, further comprising:
   processing the event action set, action model data, and model user data to generate a plurality of objective values and a plurality of probabilities using a plurality of machine learning models to form the model action set.
13. The method of any preceding clause, further comprising:
   processing the event with a symbolic system;
   processing the event action set with a machine learning system;
   filtering the model action set with a second symbolic system; and
   processing the filtered action set with a third symbolic system.
14. A system comprising:
   an event controller configured to identify an action;
   a model controller configured to generate an objective value and a probability;
   an action controller configured to generate a filtered action set;
   an optimization controller configured to generate suggested action sets;
   a server application executing on one or more servers and configured for:
      processing, by the event controller, an event to identify the action, comprising an action value, of an event action set, wherein the event comprises an event value;
      processing, by the model controller, the event action set to generate the objective value, corresponding to the action, and the probability, corresponding to the action, and to form a model action set from the event action set;
      filtering, by the action controller, the model action set using action rule data and rule user data to generate the filtered action set comprising the action; and
      processing, by the optimization controller using the objective value and the probability, the filtered action set with the optimization controller to generate the suggested action sets from which a selected action set is selected, wherein the selected action set corresponds to a combined action value, generated with the action value, that satisfies the event value.
15. The system of clause 14, wherein the server application is further configured for:
   executing the action from the selected action set, wherein the action identifies a set of instructions that, when executed, transmits a message.
16. The system of clause 14 or 15, wherein the server application is further configured for:
   executing the action from the selected action set, wherein the action identifies a set of instructions that, when executed, delays a transaction.
17. The system of any of clauses 14 to 16, wherein the server application is further configured for:
   processing the action from the event action set by:
   inputting model input data, selected from model user data, to a machine learning model, selected from action model data, to generate the objective value and the probability for the action.
18. The system of any of clauses 14 to 17, wherein the server application is further configured for:
   for each action of the event action set, selecting a machine learning model.
19. The system of any of clauses 14 to 18, wherein the server application is further configured for:
   processing the filtered action set with the optimization controller using a global optimization algorithm.
20. A method comprising:
   displaying a notification of an event;
   displaying a model action set generated in response to the event, wherein the model action set is generated by:
   processing an event, event rule data, and event user data to identify an action, comprising an action value, of an event action set, wherein the event comprises an event value, and
   processing the event action set, action model data, and model user data to generate an objective value, corresponding to the action, and a probability, corresponding to the action and form a model action set from the event action set;
   displaying suggested action sets generated response to filtering the model action set, wherein the suggested action sets are generated by processing a filtered action set with an optimization controller; and
   executing a selected action set in response to a selection from the suggested action sets.

## Claims

1. A method comprising:
processing an event to identify an action, comprising an action value, of an event action set, wherein the event comprises an event value;
processing the event action set to generate an objective value, corresponding to the action, and a probability, corresponding to the action, and to form a model action set from the event action set;
filtering the model action set using action rule data and rule user data to generate a filtered action set comprising the action; and
processing, using the objective value and the probability, the filtered action set with an optimization controller to generate suggested action sets from which a selected action set is selected, wherein the selected action set corresponds to a combined action value, generated with the action value, that satisfies the event value.

2. The method of claim 1, further comprising:
executing the action from the selected action set, wherein the action identifies a set of instructions that, when executed, transmits a message.

3. The method of claim 1 or 2, further comprising:
executing the action from the selected action set, wherein the action identifies a set of instructions that, when executed, delays a transaction.

4. The method of any preceding claim, further comprising:
processing the action from the event action set by:
inputting model input data, selected from model user data, to a machine learning model, selected from action model data, to generate the objective value and the probability for the action.

5. The method of any preceding claim, further comprising:
for each action of the event action set, selecting a machine learning model.

6. The method of any preceding claim, further comprising:
processing the filtered action set with the optimization controller using a global optimization algorithm.

7. The method of any preceding claim, further comprising:
presenting the suggested action sets to a user device.

8. The method of any preceding claim, further comprising:
receiving, from a user device, a selection, from the suggested action sets, of the selected action set.

9. The method of any preceding claim, further comprising:
identifying the event from user data using an event model.

10. The method of any preceding claim, further comprising:
mapping the event to the action using an event rule from event rule data, wherein the event rule comprises instructions written using a logic programming language.

11. The method of any preceding claim, further comprising: filtering the model action set by mapping the action from the model action set to the filtered action set using an action rule from the action rule data, wherein the action rule comprises instructions written using a logic programming language.

12. The method of any preceding claim, further comprising:
processing the event action set, action model data, and model user data to generate a plurality of objective values and a plurality of probabilities using a plurality of machine learning models to form the model action set.

13. The method of any preceding claim, further comprising:
processing the event with a symbolic system;
processing the event action set with a machine learning system;
filtering the model action set with a second symbolic system; and
processing the filtered action set with a third symbolic system.

14. A system comprising:
an event controller configured to identify an action;
a model controller configured to generate an objective value and a probability;
an action controller configured to generate a filtered action set;
an optimization controller configured to generate suggested action sets; and
a server application executing on one or more servers,
the system configured for performing the method of any of claims 1 to 13.

15. A method comprising:
displaying a notification of an event;
displaying a model action set generated in response to the event, wherein the model action set is generated by:
processing an event, event rule data, and event user data to identify an action, comprising an action value, of an event action set, wherein the event comprises an event value, and
processing the event action set, action model data, and model user data to generate an objective value, corresponding to the action, and a probability, corresponding to the action and form a model action set from the event action set;
displaying suggested action sets generated response to filtering the model action set, wherein the suggested action sets are generated by processing a filtered action set with an optimization controller; and
executing a selected action set in response to a selection from the suggested action sets.
